# EUROPEAN PATENT SPECIFICATION

(11) **EP 1 698 123 B1**
(45) Date of publication and mention of the grant of the patent: **24.08.2011**
(21) Application number: 04809068.2
(22) Date of filing: 16.12.2004
(51) Int. Cl.: H04L 12/56, H04L 12/24, H04L 12/26

(54) **METHOD FOR CONTROLLING FORWARDING QUALITY IN A DATA NETWORK**
VERFAHREN ZUR STEUERUNG DER WEITERLEITUNGSQUALITÄT IN EINEM DATENNETZWERK
PROCEDE POUR CONTROLER LA QUALITE DE TRANSMISSION DANS UN RESEAU DE DONNEES

(30) Priority: 22.12.2003 SE 0303464; 22.12.2003 US 530902 P
(43) Date of publication of application: 06.09.2006
(73) Proprietor: NetSocket, Inc., Plano, TX 75025 (US)
(72) Inventor: Schelén, Olov, S-945 91 NORRFJÄRDEN (SE); Bodin, Ulf, S-954 42 SUNDERBYN (SE)
(74) Representative: Epping - Hermann - Fischer
(86) International application number: PCT/SE2004/001894
(87) International publication number: WO 2005/062557

(56) References cited:
- WO-A1-03/021888
- WO-A1-03/075527
- WO-A1-03/085514
- WO-A2-02/05068
- US-A1- 2003 091 165

## Description

### Field of the invention

The present invention relates to a method in a data network for controlling forwarding quality and for achieving a high network utilisation according to the preamble of claim 1. Furthermore it relates to a computer program product for controlling forwarding quality and for achieving a high network utilisation according to the preamble of claims 9 and 10.

### Background

Networks of today that are based on the Internet Protocol (IP) offer connectivity for both private and for professional users. IP networks interconnect distributed offices through Virtual Private Networks (VPNs). These VPNs often carry several different application data streams including web transfers, telephony, and videoconferences. Also, the number of private users making telephony calls over IP-based networks and watch streaming video increases.

Voice and video applications have usually higher demands on forwarding quality than traditional data applications. This means that IP networks carrying such applications must be over-provisioned i.e., have considerably more forwarding capacity than what is needed to transport the data fed into the network, or implement some mechanism to control the forwarding quality.

Actively controlling the forwarding quality is often preferred over meeting demands for high and predictable forwarding quality through over-provisioning. This is because over-provisioning is expensive, especially if the amount of traffic cannot be accurately and reliably estimated i.e., the amount of traffic must not be under-estimated.

### Controlling the forwarding quality through shaping

The forwarding quality may be controlled by using passive end-to-end QoS measurements and traffic shaping. Passive measurements mean that existing application traffic only is used instead of explicitly injecting measurement traffic, which is referred to as active measurements. Accurate timing of packets' network entrances and departures using GPS clocks allow for detailed analyses of the delay experienced. The resulting forwarding quality including delay and other metrics such as loss can then be used to adjust traffic shaping of different classes of applications to balance the forwarding quality between these classes. For the most prioritized classes, the forwarding quality achieved may be viewed as a soft statistical assurance on the forwarding quality.

Simpler end-to-end measurements including e.g. the loss only, is attractive as an alternative to more complex end-to-end measurements using GPS. Results from such measurements may be used to give the most prioritized traffic classes soft statistical assurances on the loss.

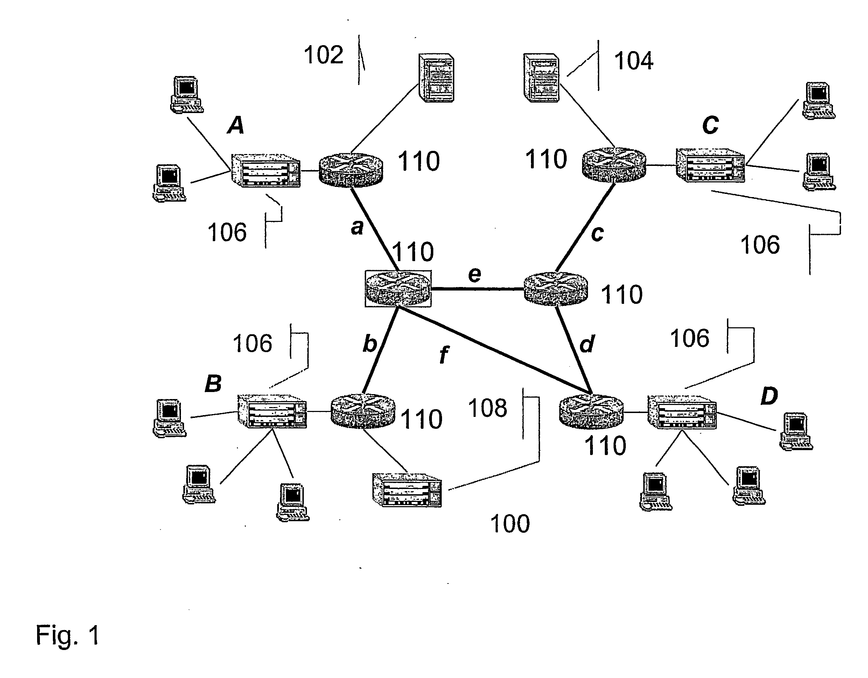

E.g., in URL: www.ipanema.com (Ipanema), a system is disclosed that includes measurement engines 106, denoted IP engine, which are localized at network accesses as illustrated in figure 1. For each packet leaving an access network heading for another access network managed by an Ipanema measurement engine 106, the departure time is stored together with an identification tag calculated from the packet. Then, when a packet reaches the target access network, the same tag as the one calculated when the packet left the first access network is calculated and associated with the arrival time.

For a given pair of access networks, accumulate timing information for arriving packets is fed back from the access network where these packets have arrived to the measurement engine 106 through which they left for their destinations. With this feedback this measurement engine 106 can calculate quality metrics such as latency, jitter, packets loss, and throughput. These quality metrics are used to adapt shaping actions.

The quality metrics calculated may also be reported up to a centralized measurement manager 104, denoted IP boss, which can interface other systems and perform advanced post-processing to generate data for network planning and such. In general terms, a measurement manager 104 is characterized by that it obtains measurement results from measurement engines 106 that are distributed in a network (typically in access networks) to performing end-to-end measurements.

### Controlling the forwarding quality through differentiation

The forwarding quality may also be controlled by partitioning the forwarding resources in network nodes i.e., network traffic differentiation and admission control. The Integrated Services (IntServ) architecture offers this kind of controlled forwarding service described in R. Braden, D. Clark, and D. Shenker, Integrated Services in the Internet Architecture: an Overview, IETF RFC 1633, July 1994. In this architecture, services offering predictable forwarding quality are defined and implemented in the network using queuing and scheduling further described in S. Shenker, C. Partridge, R. Guerin, Specification of Guaranteed Quality of Service, IETF RFC 2212, September 1997 and J. Wroclawski, Specification of the Controlled-Load Network Element Service, IETF RFC 2211, September 1997.

The Differentiated Services architecture is another framework offering support for controlled forwarding quality in IP networks described in S. Blake, D. Black, M. Carlson, E. Davies, Z. Wang, W. Weiss, An Architecture for Differentiated Service, IETF RFC 2475, December 1998. In contrast to the IntServ architecture, which provides a rather strict service control to the price of per-application data flow states in routers, the DiffServ architecture allows for a more scalable implementation. As with the IntServ architecture DiffServ routers need to implement differentiation using queuing and scheduling. In the DiffServ architecture rules for these implementations are referred to as Per-Hop Behaviours (PHBs) which is described in B. Davie, A. Charny, J.C.R. Bennet, K. Benson, J.Y. Le Boudec, W. Courtney, S. Davari, V. Firoiu, D. Stiliadis, An Expedited Forwarding PHB (Per-Hop Behavior), IETF RFC 3246, March 2002, J. Heinanen, F. Baker, W. Weiss, J. Wroclawski, Assured Forwarding PHB Group, IETF RFC 2597, June 1999 and Nichols K., Blake S., Baker F., and Black D., Definition of the Differentiated Services Field (DS Field) in the IPv4 and IPv6 Headers, Internet RFC 2474 (Standards Track), December 1998, URL: htttp://www.ietf.org/rfc/rfc2474.txt.

In addition to the forwarding services defined in the IntServ architecture, a signaling protocol named the Resource Reservation Protocol (RSVP) described in Nichols K., Blake S., Baker F., and Black D., Definition of the Differentiated Services Field (DS Field) in the IPv4 and IPv6 Headers, Internet RFC 2474 (Standards Track), December 1998, URL: http://www.ietf.org/rfc/rfc2474.txt is used by applications to request these services. RSVP messages travels through the network and establish reservation states in each router at the path between end-points i.e., desktop computers, laptops, workstations, application servers, etc. given that the request can be admitted at these routers. This means that each router performs admission control for all their outgoing interfaces to protect from service violations.

In the DiffServ architecture, core routers i.e., routers that are not directly reached by end-points or by IP networks administrated by another network provider do not need to keep any per-flow states. Instead, edge routers i.e., routers through which end-points reach the network may perform advanced traffic conditioning including per-flow or per-aggregate traffic shaping, policing, and tagging. The tags are stored in the DiffServ field in the packet headers by edge routers and are used to give packets the intended forwarding quality through core routers.

Although the DiffServ architecture does not define any mechanism for admission control, such a mechanism can be applied in DiffServ networks to improve forwarding quality predictability. E.g., RSVP can be used by restricting the processing of the protocol to edge routers only. However, a recommended approach for admission control in DiffServ networks is the concept of bandwidth brokers 102, which also is referred to as Network Resource Managers (NRMs), Resource Managers (RMs), and Network Resource Controllers (NRCs) by the community of people working in the area of computer communications.

An NRM 102 herein also referred to as resource manager typically resides in a separate node connected to the network as illustrated in **figure 1****.** It is adapted to handle reservation requests between different IP networks, but it is also adapted to manage reservations within networks requested by end-points, or by session managers such as Session Initiated Protocol (SIP) servers. The latter task may be performed with high accuracy by an NRM 102 that keep track of the current network routing topology since admission control then can be made for each individual out-interface separately i.e., knowing the routing topology the exact path between end-points can be calculated. This enables an NRM 102 to support end-to-end quality guarantees or assurances.

The IQ-Man™ product offered by the applicant, Operax AB, is arranged to perform admission control for each individual out-interface separately as well as admission control between different networks. It is thus a typical NRM. An instance of the IQ-Man™ product is arranged to learn about the networking routing topology within domains through topology probes 108 participating in the intra-domain routing protocol e.g., OSPF or IS-IS as shown in figure 1 and between domains through probes participating in Border Gateway Protocol (BGP) peering.

An NRM 102 that is able to performs per-out-interface admission control can keep track of booking levels over time as a result of committed resource requests. E.g., such information on booking levels is provided by Operax IQ-Man™_{.}

The present invention improves the quality control by providing statistical guarantees or statistical assurances to traffic. Statistical guarantees implies that it is possible to prove, by performing an analysis, that there is a certain probability that one or more quality metrics are not exceeded, e.g. packet loss or delay. Such an analysis may be based on measurements providing parameters to said analysis and/or detailed knowledge about the traffic sources. Statistical assurances may in practise imply the same quality, but it is not possible to prove the probability.

### The correlated path problem

Methods and arrangements of prior art for controlling the forwarding quality and obtaining a high network utilization based on end-to-end measurements suffer from the problem of service violations caused by additionally admitted traffic crossing highly loaded paths. That is illustrated by the following example. If two out-interfaces at a path are loaded so that the loss-rate at that path is close to the defined upper, statistical or assured, bound for the offered forwarding service. Then, the capacity for an additional data flow is requested for a path that involves one of these two loaded out-interfaces. The measured forwarding quality over that second path is good enough and the new data flow is accepted. However, this new flow causes an increase of the loss-rate at the loaded interface and the total loss-rate of the two loaded interfaces at the first path now exceeds the defined upper bound for the service.

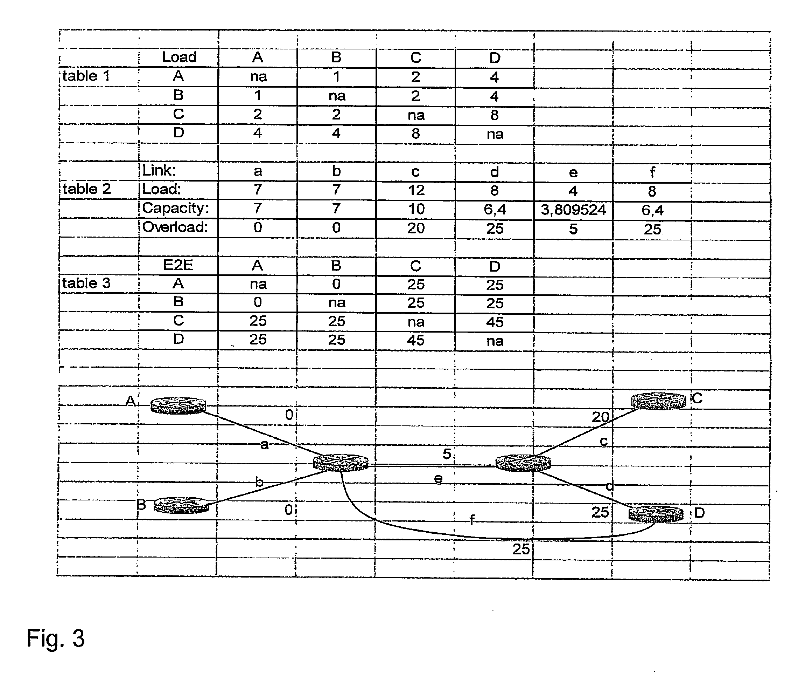

The example given above is further illustrated in **figure 3****. Table 1** demonstrates the load between defined end points. The values shown in the table may for example be megabits per second. In **table 2** is the load from **table 1** translated into load per link and specifies the overload in percent. In **table 3,** the overload specified in percent from table 2 is translated into the overload between the endpoints by simply adding the percentage. Bidirectional reservations for symmetric traffic are assumed in the **figure 3****.** This implies that two out-interfaces that are attached to the same interconnecting duplex link may be identified by referring to that link, e.g., link a refers to both out-interfaces attached to the link **a.**

Moreover, the overload shown may be seen as the aggregate peak-rate in relation to the forwarding rate of the duplex link in question. This implies that it is possible to offer loss-free forwarding at 100% overload provided that the mean-rate of the sources is 50% of their peak-rate and that optimal statistical multiplexing is achieved. That is possible since if the mean rate is half the peak rate, it is possible to load a link with twice the peak rate. I.e. the sum of the peak rate of all applications is allowed to be two times the capacity of the current link. That requires that the applications have an optimal multiplexing. An optimal multiplexing, means that when some applications send with their peak rates, an enough number of applications are at the same time required to use less than their mean rates in order to prevent that the capacity of the link is exceeded. In the example illustrated in **figure 3****,** it is however assumed that only 50% overload is allowed due to suboptimal multiplexing.

From end-to-end (E2E) measurements using **table 3** in **figure 3****,** it is evident that all paths involving **D** and **C** are overloaded. The question is now whether it is possible to add more traffic to any of the overloaded paths. It may seem that it is possible to add traffic to all paths having an overload of 25% only, since an overload of 50% was assumed to be allowed. However, from end-to-end measurements only it is not possible to not know that paths **A-C** and **B-C** are correlated with path **C-D,** which already is almost too overloaded (the overload is 45%). Thus, adding traffic to paths **A-C** or **B-C** results in service violation to path **C-D.** This is the correlated paths problem.

In contrast to paths **A-C** and **B-C,** paths **A-D** and **B-D** are not correlated with path **C-D** and are thus able to carry more traffic without causing service violation at path **C-D.** And, of course, it is also possible to admit new traffic at path **A-B** since that path is not overloaded at all. However, it is only possible to admit new traffic at that path if there already is traffic at that path, which makes it possible to measure the forwarding quality end-to-end.

### The problem of unknown path quality

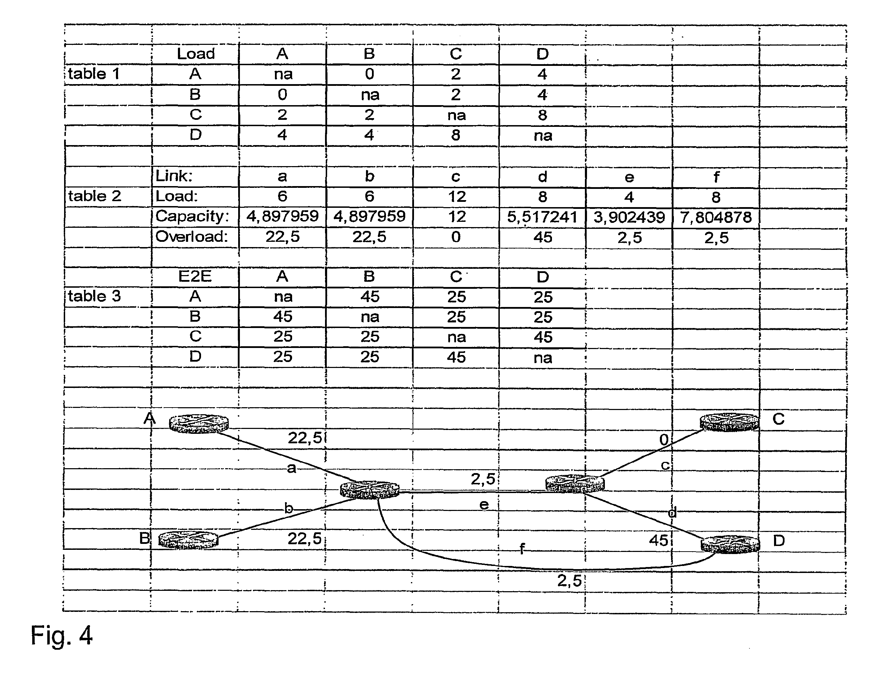

Continuing with the example above, assume that there is no traffic at path **A-B** and that link capacities differ so that the overload in the network is distributed as the illustrated scenario in **figure 4****,** which differs from the distribution of overload shown in figure 3. The end-to-end measurements show however the same overloads at all paths except at path **A-B,** which have an overload of 45%. This overload cannot be measured since there is no traffic present at that path i.e., without explicitly injecting measurement traffic, which is not performed in this example. Therefore, it is not possible to know that new traffic may not be admitted at path **A-B.** With the setting shown in **figure 3** but without traffic at path **A-B** it is possible to add traffic to path A-B, but not with the setting shown in **figure 4****.** Still, these two settings give exactly the same end-to-end measurement results as shown in **table 3** in **figure 3** and in **table 6** in **figure 4****.**

### The problem of unknown out-interference quality

An additional problem to the correlated paths problem is the problem of unknown out-interference quality. This implies that the quality at individual out-interfaces, or consecutive out-interfaces without paths branching to different out-interfaces is unknown. E.g., with the scenario shown in **figure 3** the overload at path **A-C** and **B-C** occurs mainly at link c (i.e., at both out-interfaces attached to link c), while with the scenario shown in **figure 4** it occurs mainly at links **a** and **b.** Consequently, by admitting no additional traffic at path **A-B** in the scenario shown in **figure 4****,** more traffic may be admitted at paths **A-C** and **B-C.** This cannot be done in the scenario shown in **figure 3** since that may cause service violations at path **C-D.** However, knowing which paths that are correlated is not enough to know whether the network has the setting shown in **figure 3** or the setting shown in **figure 4****.** Hence, this problem is referred to as the problem of unknown out-interface quality.

### Admission control and differentiation properties

For asynchronous networks such as those based on the Internet Protocol (IP), high utilisation of forwarding capacity can be achieved through statistical multiplexing. Then, for services offering guarantees or assurances on forwarding quality, the amount of traffic at individual out-interfaces needs to be carefully controlled. In the following, different properties of such forwarding services and the admission control that are required to create them are discussed.

### Deterministic guarantees on the forwarding quality

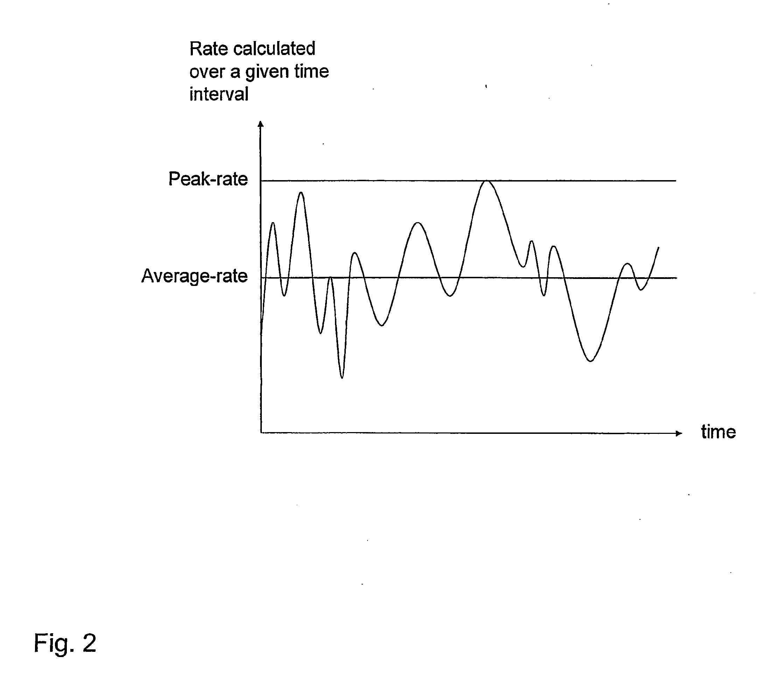

By knowing the peak-rates of application data flows, deterministic forwarding guarantees can be offered through admission control (i.e., sources makes an admission request through the network, or to an admission control server before sending any traffic). A peak-rate is the maximum rate at which an application data flow can send traffic in a given time interval as illustrated in **figure 2****.** The average-rate is often calculated over a long time interval, while peak-rate should be calculated over a much shorter time interval.

Unfortunately, offering deterministic guarantees results in low utilization of resources allocated for the forwarding service in question when application data flows have varying sending rates e.g., video coders such as ITU-T H.263 produces varying amounts of data depending on movements in the encoded picture). For application data flows having varying sending rates, network utilization can be improved though statistical multiplexing. Several independent flows sharing a common resource are said to benefit from statistical multiplexing if the sum of their peak rates can exceed the total out-interface bandwidth without resulting in quality degradation. This is based on the assumption that the flows send at their peak-rates independently of each other and therefore distributed over time.

### Statistical guarantees on the forwarding quality

To improve network utilization through statistical multiplexing, the sum of peak-rates for application data flows sharing a common out-interface must exceed the forwarding capacity of that out interface, or the portion of the capacity of that out-interface allocated for these application data flows. Note, however, that the sum of the average rates of these application data flows must not exceed that capacity. Then, the out-interface will be overloaded and no forwarding guarantees can be offered.

Therefore, in cases when the sum of peak-rates exceeds the (allocated) out-interface capacity, it is not possible to offer deterministic guarantees.

It is however possible to offer statistical guarantees, e.g. that the loss-rate at such an out-interface does not exceed a pre-defined value. Statistical properties of each individual application data flow or the aggregate of all application data flows is then required to be known in order to calculate the risk of violating the statistical guarantee when accepting an additional application data flows for the out-interface in question.

That may be achieved by obtaining statistical properties for application data flows on beforehand, they may e.g. be given from the definition of the speech codec used, or they may be estimated through measurements. The statistical properties for traffic of e.g. IP telephony applications may be reasonably predictable and the risk of violating the statistical guarantee in question may thus be calculated without measuring these properties.

The statistical properties for applications may however be very unpredictable. An example is video conference applications where the statistical properties of their traffic depend on movements of people participating in the conference. For such applications, it is preferable to measure these properties.

The information on statistical properties needs to be accurate for very short time-scales in order to be able to be used in the mathematical methods used to calculate the risk of violating given guarantees. This means that measurement-based admission control for statistically guaranteed services requires network nodes to perform operations with high time complexity i.e., processing intensive operations.

### Statistical assurances on the forwarding quality

Since node measurements require intensive processing operations in the nodes, it is often necessary to rely on statistical assurances which do not require node measurements.

### Probe-based admission control:

It is possible to achieve predictable forwarding quality while allowing for statistical multiplexing by using probing for admission control. Instead of making an admission request to the network, or to an admission control server, sources send probing traffic e.g. application data flows immediately to the network. The forwarding quality of this traffic must be monitored by the sources e.g., through the Real Time Control Protocol (RTCP) defined in Schulzrinne H., Casner S., Frederick R., and Jacobson V., RTP: A Transport Protocol for Real-Time Applications, Internet RFC 1889 (Standards Track), January 1996, URL: ftp://ftp.rfc-editor.org/in-notes/rfc1889.txt. Sources tag their probing traffic to be forwarded with lower priority than fully accepted traffic i.e., so that the forwarding quality decreases for probing traffic before fully accepted traffic notices any such degradation.

The sources experiencing sufficient forwarding quality for their probing traffic tag their traffic as fully accepted after a pre-defined probe period. The other sources that not experience sufficient forwarding quality must however continue sending traffic tagged as neither fully accepted nor probing traffic. An example is IP networks, which can tag traffic as best-effort. Thereby, assurances on forwarding quality may be given to application data flows tagged as being fully accepted. No strict guarantees are however given.

The probe-based admission control approach faces the problems of correlated paths and unknown out-interface quality described in previous section. The unknown path quality problem does not occur since the probing traffic can be forwarded separately in a forwarding class related to the class in which the target service is offered.

The probe-based approach also suffers from the problem of that many sources may probe the network at once, which results in that none of these sources is admitted. The problem of several sources probing at the same time is in L. Breslau, E. Knightly, S. Shenker, I. Stoica, and H. Zhang, "Endpoint Admission Control: Architectural Issues and Performance," in Proceedings of ACM SIGCOMM 2000, Stockholm, Sweden, August 2000 referred to as trashing. In addition, when offering services providing assurances on very low loss-rates and delay, the probing period needs to be long enough to measure these quality metrics accurately. Unfortunately, long probing periods increases the risk of trashing.

### End-to-end measurement based admission control:

The forwarding quality may be controlled using end-to-end measurements in combination with network traffic differentiation and admission control. In particular, in C. Cetinkaya and E. Knightly, Egress Admission Control, in proceedings of IEEE INFOCOM 2000, Mar. 2000, an approach for admission control in differentiated networks that combines estimations of traffic and service characteristics through end-to-end measurements is disclosed.

With the approach defined by Knightly et al. traffic characteristics are estimated by observing packet inter-arrival periods and service characteristics are estimated by observing delay variations of packets traversing the network in question. The latter implies that the delay of each packet must be possible to determine accurately, which e.g. can be made by providing each packet with a timestamp, or by using an end-to-end measurement system mentioned above.

The end-to-end based admission control approach faces the problems of correlated paths, unknown path quality, and unknown out-interface quality. With this approach, edge routers monitor the traffic. Thereby, the trashing problem mentioned in the previous section is avoided.

### Threshold or provisioning level based admission control:

Another approach to offer assurances on forwarding quality while allowing for statistical multiplexing is to make admission control decisions using a bit-rate threshold for each out-interface in a network. That is, a maximum sum of application data flow bit-rates for each such interface. This threshold is referred to as the provisioning level. Provisioning level based admission control can be made by NRMs, by routers processing RSVP messages, or by any other entity that performs per-out-interface admission control or per-network admission control i.e., a single provisioning level is used for an entire network instead of individual out-interfaces.

The sum of accepted bit-rates for application data flows plus the bit-rate of the request to be evaluated may be compared with the provisioning level of each out-interface in order to decide whether one or more of these levels is exceeded or not. An advantage with this approach is that it is possible to easily include support for advance reservations e.g., as implemented in the IQ-Man™ product offered by Operax.

The problem is however to chose these provisioning levels to allow for a correct number of application data flows to maintain target assurances on forwarding quality e.g., less than one percent packet loss measured over two minutes.

In a threshold-based admission control complemented with node measurements, the forwarding quality must be measured continuously in all routers being loaded with prioritized traffic. Although these measurements may be made with simple mechanisms available in legacy routers and only at routers carrying loads exceeding a pre-determined level, they burden these routers with additional processing and memory usage.

Creation and maintenance of deterministic services are not within the scope of the present invention, since those cannot gain service quality or network utilization through measurements. Instead, the objects of the present invention is to solve the problems related to differentiated forwarding services offering statistical guarantees and on services offering statistical assurances as further described below.

End-to-end measurements and shaping:
End-to-end measurements and shaping may be used to create and maintain a weak form of statistical assurance on forwarding quality.

The approach of using end-to-end measurements and shaping to control the forwarding quality for prioritized traffic faces the problems of correlated paths, unknown path quality, and unknown out-interface quality. In addition, the network utilization and service predictability is likely to be low since all traffic is multiplexed in the same queues. E.g., to offer sufficiently low delay and loss-rate to real-time applications best-effort traffic may need to be shaped to very low levels. This is because best-effort packets typically are considerably larger than real-time packets. Only a few large packets may thus cause severe delay spikes to the real-time traffic.

### Summary of the invention

It is desirable to obtain guarantees or assurances on the forwarding quality while still having a high network utilisation. It is however not possible to achieve statistical guarantees when no node measurements are available. Statistical assurances may however be provided as stated above. The statistical assurances may be provided by using probe-based admission control, end-to-end measurement based admission control, provisioning level based admission control and end-to-end measurements and shaping. The known method and arrangements for controlling the forwarding quality suffer however from the problem of correlated paths, the problem of unknown path quality, and the problem of unknown out-interference quality.

Thus, a first object of the present invention is to provide a method that controls the forwarding quality and improves the utilisation of the network.

The above stated object is achieved by means of a method according to claim 1.

The method provided by the present invention comprising the steps of transferring the obtained information of the network routing topology from the NRM to the measurement manager or transferring a result of the performed end-to-end measurements from a measurement manager to the NRM, and combining said end-to-end measurements and said obtained information of the network routing topology into a first information set in order to detect correlated and uncorrelated paths makes it possible to control the forwarding quality and improve the utilisation of the network.

Further embodiments of the present invention are set forth by the depending claims.

An advantage with the present invention is that the knowledge of the out-interface quality is improved.

A further advantage with the present is that network utilization and predictability of the forwarding quality offered are improved. These advantages are achieved without requirements of a resource consuming mechanisms in the network (i.e., such as advanced measurements operating continuously in each network node).

Additional important advantages provided by the inventions are that the capacity usage can be tracked per-out-interface over time, and that they make advance capacity planning and reservations possible (i.e., reservations can be scheduled over time).

### Brief description of the drawings

Fig. 1 illustrates a data network schematically, where the present invention may be implemented.
Fig. 2 is a diagram showing the peak-rate versus average rate.
Fig. 3 illustrates a first scenario in the data network shown in figure 1.
Fig. 4 illustrates a second scenario in the data network shown in figure 1.
Fig. 5 shows a flowchart of the method according to the present invention.

### Detailed description

The present invention will now be described more fully hereinafter with reference to the accompanying drawings, in which preferred embodiments of the invention are shown. This invention may, however, be embodied in many different forms and should not be construed as limited to the embodiments set forth herein; rather these embodiments are provided so that this disclosure will be thorough and complete, and will fully convey the scope of the invention to those skilled in the art as defined by the appended claims. In the drawings, like numbers refer to like elements.

A method and a computer program product according to the present invention may be implemented in a conventional data network 100 comprising interconnected routers 110 and servers.

An example of such a conventional network is a multi-technology network where an operator provides an IP/MPLS backbone and several access networks based on various switched link layer technologies e.g., including an access network based on ATM switching, another access network based on Ethernet switching and a third based on WLAN technologies. Moreover, the network may comprise interconnectable routers, servers and other network elements known by a man skilled in the art.

In this application, a data network is defined as a switched network forwarding data units between network interfaces of network nodes using identifiers associated with the target circuit being setup through the network e.g., as in Asynchronous Transfer Mode (ATM networks and in Multiprotocol Label Switching (MPLS) networks, or a datagram network forwarding data units between network interfaces of network nodes using global addresses enabling local next-hop decisions made by each node e.g., as in Internet Protocol (IP) networks. The data units may be of fixed size e.g., ATM cells or of variable size e.g., IP packets using their destination addresses for datagram forwarding or using MPLS tags for switching.

The method and the computer program product provide means for controlling the forwarding quality and for providing a high network utilization by solving the problem of correlated paths, the problem of unknown path quality, and the problem of unknown out-interference quality.

The data network used in the present invention comprises means for combining active or passive end-to-end measurement results while having knowledge of the network routing topology in order to identify uncorrelated paths and correlated paths. Networking routing topology means in this application the information of which out-interfaces that are used by all possible paths between all computers attached to the network in question. Thus, the combination according to the present invention alleviates the correlated paths problem.

The method and the arrangements of the present invention are adapted for operation in a data network 100 such as the one depicted in figure 1. Then, an NRM 102 may be adapted to send obtained information of the network routing topology to a measurement manager 104, or a measurement manager 104 may be adapted to send end-to-end measurement results to an NRM 102. A functional entity arranged to receive information is referred to as a master manager and a functional entity arranged to provide the information is referred to as a slave manager.

Note that the master manager and slave manager functional entities may be located in the same computer, in the same computer program product or process, or be co-located in any other fashion, as well as being separated in different computers, in different computer program products or processes, or be separated in any other fashion obvious for a man skilled in the art.

The information transfer, i.e. the topology information or the E2E measurement result depending on which of the units that is the master entity, may according to embodiments of the invention be initiated in three different ways. Firstly, information transfers may be scheduled over time or initiated periodically. Secondly, information transfers may be explicitly requested by the master manager. Thirdly, information transfers may be triggered by specific events defined by the master manager such as an NRM 102 or a measurement manager 104 in the slave manager such as a measurement manager 104 if the master manager is an NRM 102 or an NRM 102 if the master manager is a measurement manager 104. I.e., the master manager comprises means for determining which events that shall trigger the information transfer. The NRM may e.g. be adapted to request to get only those measurement results that show loss-rates exceeding a defined limit.

The information transfer may be limited to only include parts of the complete information e.g., only end-to-end measurement results for some paths if the NRM is the master manager or only topology information related to one or a few paths if the measurement manager is the master manager.

According to one embodiment of the present invention, information on data flow presence at individual out-interfaces is combined with active or passive end-to-end measurement results and knowledge of the network routing topology. This embodiment has two different purposes. Firstly, this combination of information is to further separate correlated and overloaded paths into paths that are correlated at potentially overloaded out-interfaces and into paths that are only correlated at out-interfaces and not potentially overloaded. Thus, the problem of correlated paths is reduced further by alleviating the problem of unknown out-interface quality. Secondly, the purpose of combining these sets of information is also performed in order to estimate the load at paths not being explicitly measured. Thus, the problem of unknown path quality is reduced.

The embodiment of the present invention is further described by the scenario illustrated in **figure 4****.** According to **table 3** in **figure 4****,** paths **A-C, A-D, B-D,** and **B-C** show an end-to-end (E2E) overload of 25% and path **C-D** an end-to-end (E2E) overload of 45% which is close to the upper bound of 50%. By combining topology awareness with end-to-end measurement results it is known that these paths are overloaded and correlated. With this information only, it is not possible to admit new traffic at these paths. However, by adding information about data flow presence at all out-interfaces of these paths it is possible to estimate the load for each of the interfaces of the considered paths separately. In addition, it is possible to estimate the (over)load at path **A-B.** According to the scenario illustrated in **figure 4****,** it would be estimated that the overload at path **C-D** occurs mainly at out-interface **d** and that the overloads at paths **A-C** and **B-C** occur mainly at out-interfaces **a** and **b.** That results in the possibility to detect that path A-B is heavily loaded.

By knowing which out-interfaces that are only lightly loaded i.e., in the scenario of **figure 4****,** out-interfaces **c, e,** and **f,** it is possible to admit new traffic at paths **A-C, A-D, B-C,** and **B-D** with limited risk of that the new traffic causes service violations at path **C-D.** It is also known from **table 2** in **figure 4** and by using the knowledge about the topology that by admitting new traffic at path **A-C** the service quality at path **A-D** will likely be degraded and new additional traffic at path **B-C** will likely degrade the service quality at path **B-D ,** since out-interfaces a and b are overloaded.

Thus, by combining active or passive end-to-end measurements results and knowledge of the network routing topology according to the present invention with information on data flow presence at individual out-interfaces with it is possible to separate correlated and overloaded paths into paths that are correlated at potentially overloaded out-interfaces and into paths that are only correlated at out-interfaces and not potentially overloaded.

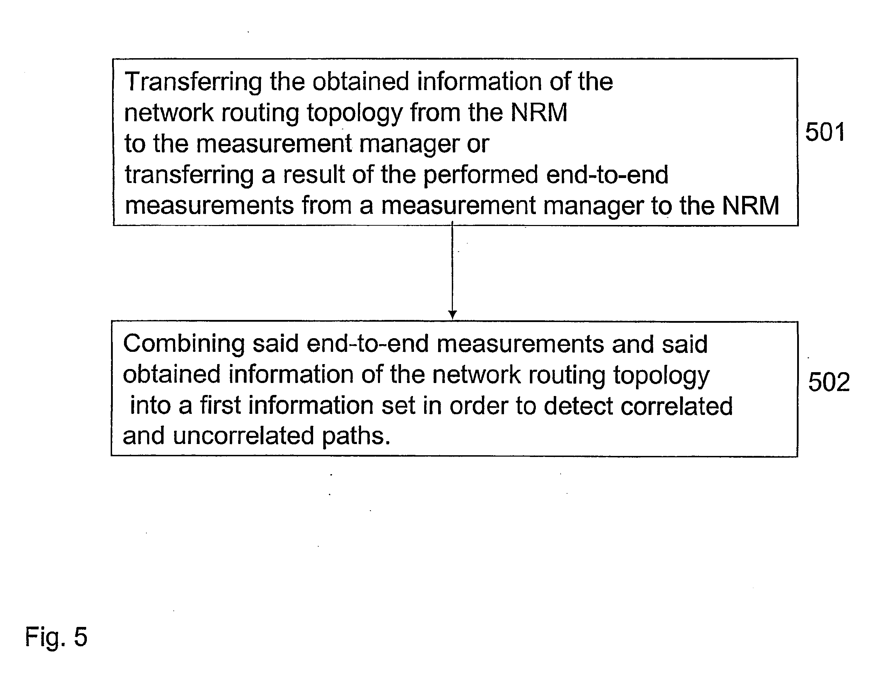

The data network wherein the method for controlling the forwarding quality is implemented, comprises a measurement manager comprising means for performing end-to-end measurements between nodes in said data network and a Network Resource Manager, NRM, comprising means for obtaining information of the network topology, according to the present invention. The method illustrated in the flowchart of **figure 5** comprises the steps of: 501. Transferring the obtained information of the network routing topology from the NRM to the measurement manager or transferring a result of the performed end-to-end measurements from a measurement manager to the NRM.

502. Combining said end-to-end measurements and said obtained information of the network routing topology into a first information set in order to detect correlated and uncorrelated paths.

As mentioned above, the method and thus functionality of the entities measurement manager and resource controller also referred to as an NRM used in the present invention may be implemented by a computer program product The computer program product is directly loadable into the internal memory of a computer within one or more nodes, e.g. a router or a server, in the data network according to the present invention, comprising the software code portions for performing the steps of the method according to the present invention. The computer program product is further stored on a computer usable medium, comprising readable program for causing a computer, within a router or server in the data network, to control an execution of the steps of the method of the present invention.

In the drawings and specification, there have been disclosed typical preferred embodiments of the invention and, although specific terms are employed, there are used in a generic and descriptive sense only and not for purposes of limitation, the scope of the invention being set forth in the following claims.

## Claims

1. Method for performing admission control in a data network, the method comprising:
- performing, by a measurement manager (104), end-to-end measurements between nodes in said data network,
- obtaining, by a Network Resource Manager (102) information of the network routing topology,
- transferring the obtained information of the network routing topology from the Network Resource Manager (102) to the measurement manager (104) or transferring a result of the performed end-to-end measurements from a measurement manager (104) to the Network Resource Manager (102),
- combining said end-to-end measurements and said obtained information of the network routing topology into a first information set,
- detecting correlated and uncorrelated paths based upon the first information set,
- combining information on correlated and uncorrelated paths with information on data flow presence at individual links (a, b, c, d, e, f) and
- performing admission control based on the combined information on correlated and uncorrelated paths and data flow presence at individual links (a, b, c, d, e, f).

2. Method according to claim 1, wherein when the obtained information of the network routing topology is transferred from the Network Resource Manager (102) to the measurement manager (104), the method comprising the further step of:
- scheduling the transfer of the obtained information of the network routing topology over time or initiating the transfer of the obtained information of the network routing topology periodically.

3. Method according to claim 1, wherein when the result of the performed end-to-end measurements is transferred from the measurement manager (104) to the Network Resource Manager (102), the method comprising the further step of:
- scheduling the transfer of the result of the performed end-to-end measurements over time or initiating the transfer of the result of the performed end-to-end measurements periodically.

4. Method according to claim 1, wherein when the obtained information of the network routing topology is transferred from the Network Resource Manager (102) to the measurement manager (104), the method comprising the further step of:
- requesting the transfer of the obtained information of the network routing topology explicitly by the measurement manager (104) as a master manager .

5. Method according to claim 1, wherein when the result of the performed end-to-end measurements is transferred from the measurement manager (104) to the Network Resource Manager (102), the method comprising the further step of:
- requesting the transfer of the result of the performed end-to-end measurements explicitly by the Network Resource Manager (102) as a master manager .

6. Method according to claim 1, wherein when the obtained information of the network routing topology is transferred from the Network Resource Manager (102) to the measurement manager (104), the method comprising the further step of:
- triggering the transfer of the obtained information of the network routing topology by specific events in the Network Resource Manager (102) as a slave manager, the measurement manager (104) being a master manager.

7. Method according to claim 1, wherein when the result of the performed end-to-end measurements is transferred from the measurement manager (104) to the Network Resource Manager (102), the method comprising the further step of:
- triggering the transfer of the result of the performed end-to-end measurements by specific events in the measurement manager (104) as a slave manager, the Network Resource Manager (102) being a master manager.

## Patentansprüche

1. Verfahren zum Durchführen einer Zugangskontrolle in einem Datennetz, wobei das Verfahren umfasst:
- Durchführen von Ende-Ende-Messungen zwischen Knoten in dem Datennetz durch einen Mess-Manager (104),
- Einholen von Information der Netzwerkleitweglenkungstopologie durch einen Netzressourcen-Manager (102),
- Übertragen der eingeholten Information der Netzwerkleitweglenkungstopologie vom Netzressourcen-Manager (102) zum Mess-Manager (104) oder Übertragen eines Ergebnisses der durchgeführten Ende-Ende-Messungen von einem Mess-Manager (104) zum Netzressourcen-Manager (102),
- Kombinieren der Ende-Ende-Messungen und der eingeholten Information der Netzwerkleitweglenkungstopologie zu einem ersten Informationssatz,
- Erfassen korrelierter und unkorrelierter Wege auf Grundlage des ersten Informationssatzes,
- Kombinieren von Information über korrelierte und unkorrelierte Wege mit Information über Datenflussvorkommen bei einzelnen Verbindungen (a, b, c, d, e, f), und
- Durchführen einer Zugangskontrolle auf Grundlage der kombinierten Information über korrelierte und unkorrelierte Wege und ein Datenflussvorkommen bei einzelnen Verbindungen (a, b, c, d, e, f).

2. Verfahren nach Anspruch 1, wobei, wenn die eingeholte Information der Netzwerkleitweglenkungstopologie vom Netzressourcen-Manager (102) zum Mess-Manager (104) übertragen wird, das Verfahren den weiteren Schritt umfasst:
- Zeitablaufplanung der Übertragung der eingeholten Information der Netzwerkleitweglenkungstopologie oder periodisches Initiieren der Übertragung der eingeholten Information der Netzwerkleitweglenkungstopologie.

3. Verfahren nach Anspruch 1, wobei, wenn das Ergebnis der durchgeführten Ende-Ende-Messungen vom Mess-Manager (104) zum Netzressourcen-Manager (102) übertragen wird, das Verfahren den weiteren Schritt umfasst:
- Zeitablaufplanung der Übertragung des Ergebnisses der durchgeführten Ende-Ende-Messungen oder periodisches Initiieren der Übertragung des Ergebnisses der durchgeführten Ende-Ende-Messungen.

4. Verfahren nach Anspruch 1, wobei, wenn die eingeholte Information der Netzwerkleitweglenkungstopologie vom Netzressourcen-Manager (102) zum Mess-Manager (104) übertragen wird, das Verfahren den weiteren Schritt umfasst:
- Anfordern der Übertragung der eingeholten Information der Netzwerkleitweglenkungstopologie explizit durch den Mess-Manager (104) als Master-Manager.

5. Verfahren nach Anspruch 1, wobei, wenn das Ergebnis der durchgeführten Ende-Ende-Messungen vom Mess-Manager (104) zum Netzressourcen-Manager (102) übertragen wird, das Verfahren den weiteren Schritt umfasst:
- Anfordern der Übertragung des Ergebnisses der durchgeführten Ende-Ende-Messungen explizit durch den Netzressourcen-Manager (102) als Master-Manager.

6. Verfahren nach Anspruch 1, wobei, wenn die eingeholte Information der Netzwerkleitweglenkungstopologie vom Netzressourcen-Manager (102) zum Mess-Manager (104) übertragen wird, das Verfahren den weiteren Schritt umfasst:
- Auslösen der Übertragung der eingeholten Information der Netzwerkleitweglenkungstopologie durch spezifische Ereignisse im Netzressourcen-Manager (102) als Slave-Manager, wobei der Mess-Manager (104) ein Master-Manager ist.

7. Verfahren nach Anspruch 1, wobei, wenn das Ergebnis der durchgeführten Ende-Ende-Messungen vom Mess-Manager (104) zum Netzressourcen-Manager (102) übertragen wird, das Verfahren den weiteren Schritt umfasst:
- Auslösen der Übertragung des Ergebnisses der durchgeführten Ende-Ende-Messungen durch spezifische Ereignisse im Mess-Manager (104) als Slave-Manager, wobei der Netzressourcen-Manager (102) ein Master-Manager ist.

## Revendications

1. Procédé de réalisation d'un contrôle d'admission dans un réseau de données, le procédé comportant :
- la réalisation, par un gestionnaire de mesures (104), de mesures de bout en bout entre des noeuds dans ledit réseau de données,
- l'obtention, par un gestionnaire de ressources de réseau (102), d'informations de la topologie d'acheminement de réseau,
- le transfert des informations obtenues de la topologie d'acheminement de réseau du gestionnaire de ressources de réseau (102) au gestionnaire de mesures (104) ou le transfert d'un résultat des mesures de bout en bout réalisées d'un gestionnaire de mesures (104) au gestionnaire de ressources de réseau (102),
- la combinaison desdites mesures de bout en bout et desdites informations obtenues de la topologie d'acheminement de réseau vers un premier jeu d'informations,
- la détection de trajets corrélés et non corrélés sur la base du premier jeu d'informations,
- la combinaison d'informations sur des trajets corrélés et non corrélés avec des informations sur la présence de flux de données au niveau de liens individuels (a, b, c, d, e, f) et
- la réalisation d'un contrôle d'admission sur la base des informations combinées sur des trajets corrélés et non corrélés et la présence de flux de données au niveau de liens individuels (a, b, c, d, e, f).

2. Procédé selon la revendication 1, où, quand les informations obtenues de la topologie d'acheminement de réseau sont transférées du gestionnaire de ressources de réseau (102) au gestionnaire de mesures (104), le procédé comporte l'étape supplémentaire de :
- programmation du transfert des informations obtenues de la topologie d'acheminement de réseau dans le temps ou initiation du transfert des informations obtenues de la topologie d'acheminement de réseau périodiquement.

3. Procédé selon la revendication 1, où, quand le résultat des mesures de bout en bout réalisées est transféré du gestionnaire de mesures (104) au gestionnaire de ressources de réseau (102), le procédé comporte l'étape supplémentaire de :
- programmation du transfert du résultat des mesures de bout en bout réalisées dans le temps ou initiation du transfert du résultat des mesures de bout en bout réalisées périodiquement.

4. Procédé selon la revendication 1, où, quand les informations obtenues de la topologie d'acheminement de réseau sont transférées du gestionnaire de ressources de réseau (102) au gestionnaire de mesures (104), le procédé comporte l'étape supplémentaire de :
- demande de transfert des informations obtenues de la topologie d'acheminement de réseau explicitement par le gestionnaire de mesures (104) comme gestionnaire maître.

5. Procédé selon la revendication 1, où, quand le résultat des mesures de bout en bout réalisées est transféré du gestionnaire de mesures (104) au gestionnaire de ressources de réseau (102), le procédé comporte l'étape supplémentaire de :
- demande de transfert du résultat des mesures de bout en bout réalisées explicitement par le gestionnaire de ressources de réseau (102) comme gestionnaire maître.

6. Procédé selon la revendication 1, où, quand les informations obtenues de la topologie d'acheminement de réseau sont transférées du gestionnaire de ressources de réseau (102) au gestionnaire de mesures (104), le procédé comporte l'étape supplémentaire de :
- déclenchement du transfert des informations obtenues de la topologie d'acheminement de réseau par des événements spécifiques dans le gestionnaire de ressources de réseau (102) comme gestionnaire asservi, le gestionnaire de mesures (104) étant un gestionnaire maître.

7. Procédé selon la revendication 1, où, quand le résultat des mesures de bout en bout réalisées est transféré du gestionnaire de mesures (104) au gestionnaire de ressources de réseau (102), le procédé comporte l'étape supplémentaire de :
- déclenchement du transfert du résultat des mesures de bout en bout réalisées par des événements spécifiques dans le gestionnaire de mesures (104) comme gestionnaire asservi, le gestionnaire de ressources de réseau (102) étant un gestionnaire maître.
